# EUROPEAN PATENT SPECIFICATION

(11) **EP 3 539 930 B1**
(45) Date of publication and mention of the grant of the patent: **02.08.2023**
(21) Application number: 18763671.7
(22) Date of filing: 22.01.2018
(51) Int. Cl.: C02F 1/28, B01J 20/02, B01J 20/20, B01J 20/28, C01B 32/384

(54) **METHOD FOR SUPPLYING ACTIVATED CARBON SLURRY**
VERFAHREN ZUR BEREITSTELLUNG VON AKTIVIERTER KOHLENSTOFFSCHLÄMME
PROCÉDÉ DE FOURNITURE D'UNE SUSPENSION DE CHARBON ACTIF

(30) Priority: 07.03.2017 JP 2017043169
(43) Date of publication of application: 18.09.2019
(73) Proprietor: Metawater Co., Ltd., Tokyo 101-0041 (JP)
(72) Inventor: MIMA, Satoru, Tokyo 101-0041 (JP); SHIODE, Sadamitsu, Tokyo 101-0041 (JP); OYACHI, Hiroyuki, Tokyo 101-0041 (JP); SUGIURA, Kiyotaka, Tokyo 101-0041 (JP)
(74) Representative: Mewburn Ellis LLP
(86) International application number: PCT/JP2018/001808
(87) International publication number: WO 2018/163620

(56) References cited:
- JP-A- 2000 263 039
- JP-A- 2005 187 253
- JP-A- 2006 000 693
- JP-A- 2007 237 169
- JP-B2- 4 468 895
- JP-B2- 5 910 973
- PAN LONG ET AL: "Superiority of wet-milled over dry-milled superfine powdered activated carbon for adsorptive 2-methylisoborneol removal", WATER RESEARCH, ELSEVIER, AMSTERDAM, NL, vol. 102, 1 July 2016 (2016-07-01), pages 516-523, XP029673569, ISSN: 0043-1354, DOI: 10.1016/J.WATRES.2016.06.062
- Yoshihiko Matsui ET AL: "Supplementary Information Superiority of wet-milled over dry-milled superfine powdered activated carbon for adsorptive 2-methylisoborneol removal", , 1 July 2016 (2016-07-01), XP055696875, Retrieved from the Internet: URL:https://ars.els-cdn.com/content/image/ 1-s2.0-S0043135416305000-mmc1.pdf [retrieved on 2020-05-19]
- PAN LONG ET AL: "Micro-milling of spent granular activated carbon for its possible reuse as an adsorbent: Remaining capacity and characteristics", WATER RESEARCH, vol. 114, 14 February 2017 (2017-02-14), pages 50-58, XP029944164, ISSN: 0043-1354, DOI: 10.1016/J.WATRES.2017.02.028
- Long Pan ET AL: "Supplementary Information Micro-milling of Spent Granular Activated Carbon for its Possible Reuse as an Adsorbent: Remaining Capacity and Characteristics", , 14 February 2017 (2017-02-14), pages 1-33, XP055696499, Retrieved from the Internet: URL:https://ars.els-cdn.com/content/image/ 1-s2.0-S0043135417301100-mmc1.pdf [retrieved on 2020-05-18]

## Description

### TECHNICAL FIELD

The present disclosure relates to an activated carbon slurry supply method, and especially relates to an activated carbon slurry supply method that can favorably suppress scale precipitation from activated carbon slurry.

### BACKGROUND

In water treatment for improving the water quality of water to be treated by adsorption of activated carbon, techniques of grinding activated carbon to enhance the adsorption performance of the activated carbon are known. For example, according to PTL 1, dry powder activated carbon in the dry state is subjected to dry grinding, and the pulverized activated carbon in the dry state is mixed with dissolution water to obtain activated carbon slurry. According to PTL 1, by pulverizing the activated carbon using a dry grinder to stably obtain a sharp particle size distribution for the activated carbon, the adsorption performance of the activated carbon is enhanced favorably. According to PTL 2, activated carbon is subjected to wet grinding to a predetermined particle size, and suspension water containing the wet ground activated carbon is added to water to be treated. In this way, the adsorption performance of the activated carbon is sufficiently utilized while suppressing secondary flocculation of activated carbon particulates.

### CITATION LIST

### Patent Literatures

PTL 1: JP 5910973 B2
PTL 2: JP 4468895 B2
L. Pan et al. ["Superiority of wet-milled over dry-milled superfine powdered activated carbon for adsorptive 2-methylisoborneol removal", WATER RESEARCH, ELSEVIER, AMSTERDAM, NL, (20160701), vol. 102, pages 516 - 523 ] compares the use of wet-milled and dry-milled superfine powdered activated carbon (SPAC) for adsorptive 2-methylisoborneol removal for water treatment purposes. Supplementary information related to the same disclosure is also provided ["Supplementary Information Superiority of wet-milled over dry-milled superfine powdered activated carbon for adsorptive 2-methylisoborneol removal", (20160701), URL: https://ars.els-cdn.com/content/image/1-s2.0-S0043135416305000-mmc1.pdf]

### SUMMARY

### (Technical Problem)

As a result of research on the above-described conventional water treatment techniques using ground activated carbon, we found out that, when ground activated carbon is conveyed in a state of activated carbon slurry in the presence of water, a calcium compound contained in the activated carbon dissolves in the water in a large amount, and scale of a calcium compound such as calcium carbonate tends to form.

It could therefore be helpful to provide an activated carbon slurry supply method that can favorably suppress scale precipitation from activated carbon slurry even when the activated carbon slurry contains ground activated carbon and water.

### (Solution to Problem)

We conducted extensive studies. We hypothesized that scale precipitation from activated carbon slurry is caused by the following reason: Activated carbon ground and reduced in particle size and water are in contact with each other in a larger area, which facilitates dissolution of a larger amount of calcium compound in the water. We then discovered that, by adding an acid at predetermined timing in an activated carbon slurry supply method of conveying activated carbon slurry containing ground raw material activated carbon (ground activated carbon) and raw material water to a predetermined point, scale precipitation can be suppressed favorably even when the activated carbon slurry contains pulverized activated carbon.

An activated carbon slurry supply method according to the present invention is as set out in claim 1.

Herein, in a wet grinding method in which the step A2 is followed by the step A1, "before the end of the step A" can be regarded as "before the end of the step A1" (e.g. before obtaining the activated slurry while grinding the raw material activated carbon in the below-described activated carbon suspension water to prepare the ground activated carbon). In a dry grinding method in which the step A1 is followed by the step A2, "before the end of the step A" can be regarded as "before the end of the step A2" (e.g. before obtaining the activated slurry by mixing the below-described ground activated carbon water containing the raw material water and the ground activated carbon).

Herein, the "particle size" of each of the raw material activated carbon and the ground activated carbon represents a volume average particle size (D50) at which, in a particle size distribution (volume basis) measured by laser diffraction scattering, the cumulative volume calculated from a small diameter end of the distribution reaches 50 %.

As a result of adding, in the step C, the amount of the acid determined in the steps D1 and D2, the activated carbon slurry can be supplied more favorably while reliably suppressing scale precipitation from the activated carbon slurry using the latency time until the precipitation of the calcium compound from the activated carbon slurry starts.

Herein, the "time required to the end of the step B" refers to the time required to convey the activated carbon slurry to the point of mixing with the water to be treated in the case of mixing the activated carbon slurry with the water to be treated without diluting it with the dilution water, and the time required to convey the activated carbon slurry to the point of mixing with the dilution water in the case of mixing the activated carbon slurry with the water to be treated after mixing it with the dilution water.

Preferably, in the activated carbon slurry supply method according to the present disclosure, the additive amount of the acid determined in the step D2 is not more than an amount of the acid necessary for causing a Langelier's index of the activated carbon slurry to be 0. When setting the additive amount of the acid to such an amount that causes the latency time to be more than the time determined in the step D1 to reliably suppress scale precipitation from the activated carbon slurry, by limiting the amount of the acid to not more than the foregoing upper limit, scale precipitation from the activated carbon slurry can be efficiently suppressed using a smaller amount of the acid, and the activated carbon slurry can be supplied further favorably.

Herein, "Langelier's index" is, for example, an index indicating the degree of saturation of calcium carbonate in water as described in Langelier, W. F., "The Analytical Control of Anticorrosion Water Treatment", J. American Water Works, vol. 28, 1936, p. 1500.

Herein, the Langelier's index can be calculated according to a method notified by Water Supply Division, Ministry of Health, Labour and Welfare (water quality management target setting item inspection method - October 10, 2003, Kensui-hatsu No. 101001 - appendix 4).

Preferably, in the activated carbon slurry supply method according to the present disclosure, in the step A, the step A1 is followed by the step A2, in the step A2, ground activated carbon water containing the ground activated carbon prepared in the step A1 and the raw material water is mixed in the mixer to obtain the activated carbon slurry, and in the step C, the acid is added to at least one of the raw material water before flowing into the mixer and the ground activated carbon water in the mixer. In the case where the dry grinding method in which the step A1 is followed by the step A2 is used in the activated carbon slurry supply method, the ground activated carbon reduced in particle size and the raw material water are in contact with each other in a large area in the ground activated carbon water as a result of mixing, which facilitates dissolution of a large amount of the calcium compound in the water. By adding the acid to at least one of the raw material water before flowing into the mixer and the ground activated carbon water in the mixer, the acid addition can be performed before the calcium compound dissolves in the water in a large amount due to the contact between the ground activated carbon and the raw material water. Scale precipitation from the activated carbon slurry can thus be suppressed more favorably.

Preferably, in the activated carbon slurry supply method according to the present disclosure, in the step C, the acid is added to at least the raw material water before flowing into the mixer. By adding the acid to at least the raw material water before flowing into the mixer in the case where the dry grinding method is used in the activated carbon slurry supply method, the acid addition can be reliably performed before the calcium compound dissolves in the water in a large amount due to the contact between the ground activated carbon and the raw material water. Scale precipitation from the activated carbon slurry can thus be suppressed further favorably.

Preferably, in the activated carbon slurry supply method according to the present disclosure, in the step A, the step A2 is followed by the step A1, in the step A1, the raw material activated carbon in activated carbon suspension water obtained by mixing the raw material activated carbon and the raw material water is ground in the grinder to obtain the activated carbon slurry, and in the step C, the acid is added to at least one of the raw material water, the activated carbon suspension water before flowing into the grinder, and the activated carbon suspension water in the grinder. In the case where the wet grinding method in which the step A2 is followed by the step A1 is used in the activated carbon slurry supply method, the ground activated carbon reduced in particle size as a result of grinding the raw material activated carbon and the raw material water in the activated carbon suspension water are in contact with each other in a large area, which facilitates dissolution of a large amount of the calcium compound in the water. By adding the acid to at least one of the raw material water, the activated carbon suspension water before flowing into the grinder, and the activated carbon suspension water in the grinder, the acid addition can be performed before the calcium compound dissolves in the water in a large amount due to the grinding of the raw material activated carbon in the activated carbon suspension water. Scale precipitation from the activated carbon slurry can thus be suppressed more favorably.

Preferably, in the activated carbon slurry supply method according to the present disclosure, in the step C, the acid is added to at least one of the raw material water and the activated carbon suspension water before flowing into the grinder. In the case where the wet grinding method is used in the activated carbon slurry supply method, by adding the acid to at least one of the raw material water and the activated carbon suspension water before flowing into the grinder, the acid addition can be reliably performed before the calcium compound dissolves in the water in a large amount from the raw material activated carbon ground in the activated carbon suspension water (i.e. ground activated carbon), and scale precipitation from the activated carbon suspension water before being supplied to the grinder can also be suppressed. Scale precipitation from the activated carbon slurry can thus be suppressed further favorably.

Preferably, in the activated carbon slurry supply method according to the present disclosure, the acid is carbon dioxide or sulfuric acid. As a result of using carbon dioxide or sulfuric acid as the acid, for example, metallic pipes used for the supply of the activated carbon slurry can be prevented from corrosion, and also the activated carbon slurry can be suitably used for water purification treatment of drinking water and the like.

### (Advantageous Effect)

It is thus possible to provide an activated carbon slurry supply method that can favorably suppress scale precipitation from activated carbon slurry even when the activated carbon slurry contains ground activated carbon and water.

### BRIEF DESCRIPTION OF THE DRAWINGS

In the accompanying drawings:
FIG. 1A is a block diagram illustrating a typical activated carbon slurry supply flow using a dry grinding method according to the present disclosure;
FIG. 1B is a block diagram illustrating a typical activated carbon slurry supply flow using a wet grinding method according to the present disclosure;
FIG. 2A is an explanatory diagram illustrating acid addition positions when adding an acid to raw material water in the case of the dry grinding method in the step C in the activated carbon slurry supply flow illustrated in FIG. 1A;
FIG. 2B is an explanatory diagram illustrating acid addition positions when adding an acid to raw material water in the case of the wet grinding method in the step C in the activated carbon slurry supply flow illustrated in FIG. 1B;
FIG. 3A is an explanatory diagram illustrating acid addition positions when adding an acid to ground activated carbon water in the case of the dry grinding method in the step C in the activated carbon slurry supply flow illustrated in FIG. 1A;
FIG. 3B is an explanatory diagram illustrating acid addition positions when adding an acid to activated carbon suspension water before flowing into a grinder in the case of the wet grinding method in the step C in the activated carbon slurry supply flow illustrated in FIG. 1B; and
FIG. 4 is an explanatory diagram illustrating acid addition positions when adding an acid to activated carbon suspension water in the grinder in the case of the wet grinding method in the step C in the activated carbon slurry supply flow illustrated in FIG. 1B.

### DETAILED DESCRIPTION

One of the disclosed embodiments will be described in detail below, with reference to drawings. In the drawings, the same structural elements are given the same reference signs. The present disclosure is not limited to the embodiment described below.

### (Activated carbon slurry supply method)

An activated carbon slurry supply method according to the present disclosure is usable, for example, as a method of supplying activated carbon when subjecting water to be treated to activated carbon treatment in various types of water treatment such as potable water treatment, service water treatment, sewage treatment, and effluent treatment. Activated carbon slurry supplied by the method according to the present disclosure contains ground activated carbon and raw material water, and can efficiently reduce unpleasant smell, unpleasant taste, etc. of the water to be treated because the activated carbon contained in the activated carbon slurry has a large specific surface area. Therefore, the activated carbon slurry supply method according to the present disclosure is particularly suitable for use in a water purification process such as activated carbon treatment in waterworks.

The activated carbon slurry supply method according to the present invention is described in details in claim 1 and needs to include: a step A of obtaining activated carbon slurry containing ground activated carbon and raw material water, the step A including, in any order, a step A1 of preparing the ground activated carbon and a step A2 of mixing the raw material water; a step B of conveying the activated carbon slurry to a predetermined point; and a step C of adding an acid at least before the end of the step A. The activated carbon slurry supply method according to the present invention further includes a step D of determining an additive amount of the acid in the step C.

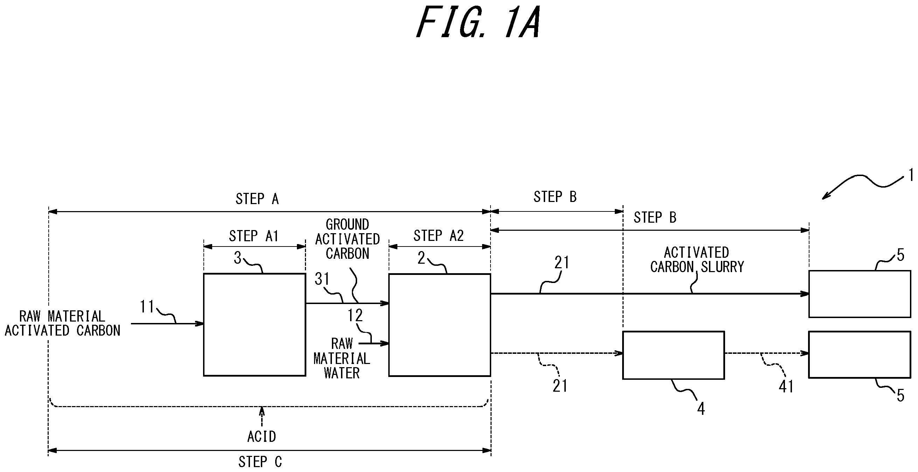

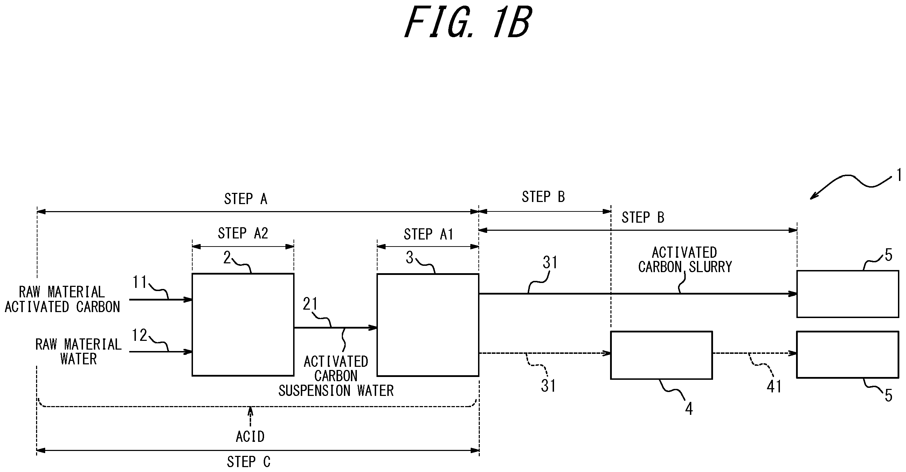

FIGS. 1A and 1B illustrate a typical activated carbon slurry supply flow 1 according to the present disclosure. FIG. 1A illustrates the activated carbon slurry supply flow 1 using a dry grinding method. FIG. 1B illustrates the activated carbon slurry supply flow 1 using a wet grinding method.

In the activated carbon slurry supply flow 1 using the dry grinding method illustrated in FIG. 1A, first, raw material activated carbon flows into a grinder 3 through a pipe 11. The flown raw material activated carbon is ground in the grinder 3, and ground activated carbon having a smaller particle size than the particle size of the raw material activated carbon flows out of the grinder 3 (step A1). The ground activated carbon flown out of the grinder 3 then flows into a mixer 2 through a pipe 31, and also raw material water flows into the mixer 2 through a pipe 12. Ground activated carbon water containing the ground activated carbon and the raw material water is thus obtained in the mixer 2. Further, the ground activated carbon water is favorably mixed in the mixer 2 by stirring or the like, and activated carbon slurry containing the ground activated carbon and the raw material water flows out of the mixer 2 (step A2).

In the activated carbon slurry supply flow 1 using the dry grinding method illustrated in FIG. 1A, typically the end of the step A2 (i.e. the mixing of the ground activated carbon water containing the ground activated carbon and the raw material water ends and the activated carbon slurry is obtained) corresponds to the "end of the step A". The obtained ground activated carbon may be temporarily stored in a storage tank (not illustrated) provided at any location between the grinder 3 and the mixer 2. The activated carbon slurry flown out of the mixer 2 may be conveyed to a mixer 5 for mixing with water to be treated through a pipe 21 without being mixed with dilution water, and then mixed with the water to be treated, as indicated by the solid line in FIG. 1A. Alternatively, the activated carbon slurry flown out of the mixer 2 may be conveyed to a mixer 4 for mixing with dilution water through a pipe 21 and mixed with the dilution water, and then conveyed to a mixer 5 for mixing with water to be treated through a pipe 41 and mixed with the water to be treated, as indicated by the dashed line in FIG. 1A.

In the activated carbon slurry supply flow 1 using the wet grinding method illustrated in FIG. 1B, first, raw material activated carbon flows into a mixer 2 through a pipe 11, and raw material water flows into the mixer 2 through a pipe 12. The flown raw material activated carbon and raw material water are mixed in the mixer 2, and flow out of the mixer 2 as activated carbon suspension water (step A2). The activated carbon suspension water flown out of the mixer 2 then flows into a grinder 3 through a pipe 21. The raw material activated carbon in the activated carbon suspension water flown into the grinder 3 is ground, and activated carbon slurry containing ground activated carbon having a smaller particle size than the particle size of the raw material activated carbon and the raw material water flows out of the grinder 3 (step A1).

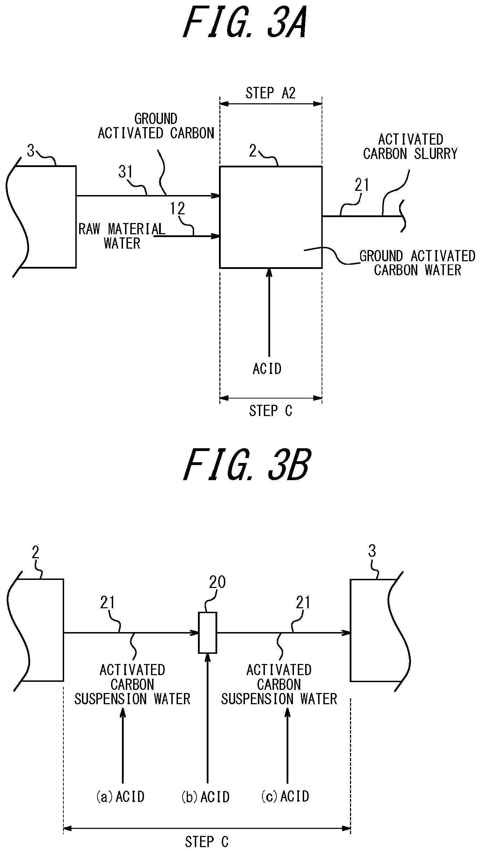

In the activated carbon slurry supply flow 1 using the wet grinding method illustrated in FIG. 1B, typically the end of the step A1 (i.e. the grinding of the raw material activated carbon in the activated carbon suspension water ends and the activated carbon slurry is obtained) corresponds to the "end of the step A". The obtained activated carbon suspension water may be temporarily stored in a storage tank 20 (see FIG. 3B) provided at any location between the mixer 2 and the grinder 3. The activated carbon slurry flown out of the grinder 3 may be conveyed to a mixer 5 for mixing with water to be treated through a pipe 31 without being mixed with dilution water, and then mixed with the water to be treated, as indicated by the solid line in FIG. 1B. Alternatively, the activated carbon slurry flown out of the grinder 3 may be conveyed to a mixer 4 for mixing with dilution water through a pipe 31 and mixed with the dilution water, and then conveyed to a mixer 5 for mixing with water to be treated through a pipe 41 and mixed with the water to be treated, as indicated by the dashed line in FIG. 1B.

Each of the steps will be described in more detail below.

### <Step A>

FIGS. 1A and 1B each illustrate the range of the step A in the activated carbon slurry supply flow. In the step A, the activated carbon slurry containing the ground activated carbon and the raw material water is obtained. To obtain the activated carbon slurry, the step A includes the step A1 of preparing the ground activated carbon and the step A2 of mixing the raw material activated carbon or the ground activated carbon with the raw material water, in any order. For example, in the case of obtaining the activated carbon slurry using the dry grinding method, the step A1 may be performed by a dry process before the step A2, as illustrated in FIG. 1A. In the case of obtaining the activated carbon slurry using the wet grinding method, the step A1 may be performed by a wet process after the step A2, as illustrated in FIG. 1B.

Since the ground activated carbon yielded by pulverizing the raw material activated carbon can be in contact with the water to be treated in a large specific surface area, high adsorption effect can be achieved. Moreover, as a result of grinding the raw material activated carbon, sufficient adsorption effect can be achieved even in the case of using a small amount of commercially available raw material activated carbon that has a relatively large particle size and is inexpensive. Cost reduction is thus possible. For example, in the case of obtaining the activated carbon slurry using the dry grinding method, the particle size distribution of the ground activated carbon, the concentration of the activated carbon slurry, and the like can be controlled easily. For example, in the case of obtaining the activated carbon slurry using the wet grinding method, the work environment can be improved by suppressing dust, and favorably dispersed activated carbon slurry can be easily obtained while suppressing secondary flocculation of the ground activated carbon.

### <<Step A1>>

In the step A1, the raw material activated carbon is ground in the grinder to prepare the ground activated carbon having a smaller particle size than the particle size of the raw material activated carbon. In the case of preparing the ground activated carbon by the dry grinding method as illustrated in FIG. 1A, in the step A1, the raw material activated carbon in the dry state can be independently ground in the grinder 3. In the case of preparing the ground activated carbon by the wet grinding method as illustrated in FIG. 1B, in the step A1, the raw material activated carbon contained in the activated carbon suspension water in which the raw material activated carbon and the raw material water are mixed can be ground in the grinder 3 in a wet environment.

### [Raw material activated carbon]

The raw material activated carbon may be, for example, common activated carbon produced by subjecting, as a starting material, a carbon substance such as coconut shell carbon, coal, saw dust, or wood chips to chemical activation treatment using zinc chloride, phosphoric acid, or the like or physical activation treatment using water vapors, carbon dioxide, air, combustion gas, or the like, without being limited thereto.

The common activated carbon is typically a kind of amorphous carbon having a porous structure, and has any shape such as fibrous, honeycomb, cylindrical, granular, particulate (particle size: 150 µm or more), or powdery (particle size: less than 150 µm). The pores of the common activated carbon are classified as micropores, mesopores, or macropores depending on pore size. For example, micropores are 20 Å or less in pore size, mesopores are more than 20 Å and less than 500 Å in pore size, and macropores are 500 Å or more in pore size. The specific surface area of the common activated carbon is 500 m²/g or more and 2500 m²/g or less.

As the raw material activated carbon, commercially available activated carbon may be used. In particular, powdery activated carbon is preferable in terms of favorably grinding the raw material activated carbon in the step A.

### [Grinding method]

The grinder 3 is not limited as long as it is capable of grinding the raw material activated carbon. Preferable examples include pulverizing equipment such as a bead mill, a tumbling ball mill, a vibratory ball mill, an attritor mill, or a jet mill using beads, balls, or rods as a grinding medium.

The grinding conditions such as the grinding medium diameter, the grinding medium filling rate, the grinding speed, the grinding time, and the grinding temperature may be selected as appropriate depending on the desired properties of the activated carbon slurry.

### «Step A2»

In the step A2, either the raw material water and the raw material activated carbon or the raw material water and the ground activated carbon are mixed in the mixer. In the case of preparing the ground activated carbon by the dry grinding method as illustrated in FIG. 1A, in the step A2, the ground activated carbon water containing the ground activated carbon prepared in the step A1 and the raw material water can be mixed in the mixer 2. In the case of preparing the ground activated carbon by the wet grinding method as illustrated in FIG. 1B, in the step A2, the raw material activated carbon and the raw material water can be mixed in the mixer 2 to obtain the activated carbon suspension water.

The raw material activated carbon usable in the step A2 is the same as the raw material activated carbon described above in the paragraphs of the step A1.

### [Raw material water]

The raw material water is not limited as long as it does not hinder modification of the water to be treated to the intended water quality. Examples of the raw material water that can be used include purification treated water purified by a purification method including the supply method according to the present disclosure, and treated water, tap water, industrial water, purified water, and the water to be treated itself during the process of purification by the purification method including the supply method according to the present disclosure.

The blending proportion of the raw material water and the raw material activated carbon or the raw material water and the ground activated carbon may be set as appropriate depending on, for example, the suitable activated carbon concentration of the activated carbon slurry described later.

### [Mixing method]

The mixer 2 may be, for example, a known mixer, without being limited thereto. The mixing conditions such as the mixing time and the mixing temperature may be selected as appropriate depending on the desired properties of the activated carbon slurry.

### «Activated carbon slurry»

The activated carbon concentration of the activated carbon slurry obtained in the step A is 0.1 mass% or more and 10 mass% or less. If the activated carbon concentration of the activated carbon slurry is more than the foregoing upper limit, the viscosity of the activated carbon slurry increases. This can hinder pumping or cause pipe clogging, for example. Besides, if the activated carbon concentration of the activated carbon slurry is more than the foregoing upper limit, typically the viscosity of the activated carbon suspension water increases, too. This can hinder the grinding of the raw material activated carbon in the activated carbon suspension water, for example. If the activated carbon concentration of the activated carbon slurry is less than the foregoing lower limit, the additive amount of the activated carbon slurry in water treatment increases. This can lead to upsizing of the activated carbon slurry addition facility, and cause a situation in which the upper limit of the amount feedable in the addition facility is exceeded, for example.

When the ground activated carbon and the raw material water come into contact with each other as a result of mixing or when the raw material activated carbon in the activated carbon suspension water is ground and the ground activated carbon and the raw material water come into contact with each other, a calcium compound contained in the raw material activated carbon dissolves in the water in a large amount, and the calcium concentration in the activated carbon slurry increases. Accordingly, in the activated carbon slurry immediately after the preparation, typically a calcium compound such as calcium carbonate is dissolved in a concentration corresponding to supersaturation, in the case where the acid addition in the below-described step C is not performed. As a result of our research on a plurality of types of raw material activated carbon commercially available for potable water, the pH of activated carbon slurry obtained in the step A typically indicated alkalinity of about 9.9 to 12.0 in the case of not performing the acid addition in the below-described step C.

The particle size of the ground activated carbon contained in the activated carbon slurry is 0.1 µm or more and preferably 0.5 µm or more, and is 10 µm or less, in volume average particle size. If the particle size of the ground activated carbon is less than the foregoing lower limit, for example when filtering the water to be treated to which the activated carbon slurry is added to purify the water to be treated, it is difficult to remove the ground activated carbon from the water to be treated to which the activated carbon slurry is added. If the particle size of the ground activated carbon is more than the foregoing upper limit, the surface area in which the ground activated carbon is in contact with the water to be treated in the water treatment is insufficient, so that the activated carbon slurry cannot exhibit sufficient adsorption effect.

### <Step B>

In the step B, the activated carbon slurry obtained in the step A is conveyed to the point of mixing with the dilution water or the point of mixing with the water to be treated. More specifically, in the step B, for example, the activated carbon slurry flown out of the mixer 2 or the grinder 3 may be directly conveyed to the point of mixing with the water to be treated (mixer 5), as indicated by the solid line in FIG. 1A or 1B. Alternatively, the activated carbon slurry flown out of the mixer 2 or the grinder 3 may be conveyed to the point of mixing with the dilution water (mixer 4) and, after diluting the activated carbon slurry with the dilution water, the activated carbon slurry flown out of the mixer 4 may be conveyed to the point of mixing with the water to be treated (mixer 5), as indicated by the dashed line in FIG. 1A or 1B. In the step B, for example, the mixer 4 for mixing the activated carbon slurry and the dilution water may be directly connected to the mixer 2 or the grinder 3 without a pipe being located therebetween, to immediately dilute the obtained activated carbon slurry (not illustrated).

In the case of mixing the activated carbon slurry with the water to be treated without diluting the activated carbon slurry in the step B (as indicated by the solid line in FIG. 1A or 1B), the conveyed activated carbon slurry is mixed with the water to be treated in the mixer 5 by any method, thereby purifying the water to be treated. Typically, when activated carbon slurry is mixed with water to be treated, the calcium concentration in the activated carbon slurry decreases significantly. It is thus considered that, after the activated carbon slurry is mixed with the water to be treated, the possibility of scale precipitation from the activated carbon slurry decreases significantly.

The water to be treated may be, for example, water flowing in a potable water treatment system, water flowing in a service water treatment system, water flowing in an effluent treatment system, or water flowing in a sewage treatment system, without being limited thereto. In particular, the water to be treated is preferably water used in the production of potable water such as drinking water for which high purification level is required, in terms of sufficiently utilizing high adsorption effect of the activated carbon slurry.

The mixing conditions such as the mixing proportion of the water to be treated and the activated carbon slurry and the mixing temperature may be set as appropriate depending on the desired water quality and properties intended by the water treatment.

In the case of mixing the activated carbon slurry with the dilution water in the step B (as indicated by the dashed line in FIG. 1A or 1B), the calcium concentration in the activated carbon slurry decreases significantly. It is thus considered that, after the activated carbon slurry is mixed with the dilution water, the possibility of scale precipitation from the activated carbon slurry decreases significantly.

The dilution water may be, for example, water equivalent to the raw material water, without being limited thereto.

The degree of dilution of the activated carbon slurry using the dilution water is not limited, and may be set freely. For example, the degree of dilution is preferably 1.5 times or more and 10 times or less, and more preferably about 2 times. By adding the dilution water, the calcium concentration in the activated carbon slurry can be reduced appropriately. Here, if the degree of dilution is not less than the foregoing lower limit, slurry precipitation in the activated carbon slurry can be suppressed more favorably. If the degree of dilution is not more than the foregoing upper limit and is preferably about 2 times, high adsorption effect of the activated carbon slurry can be ensured without excessively diluting the activated carbon slurry.

In the diluted activated carbon slurry, the calcium compound may be in any of a supersaturated state, a saturated state, and an unsaturated state.

As the dilution method, the dilution water may be added to and mixed with the flowing activated carbon slurry or the stored activated carbon slurry, or the activated carbon slurry may be added to and mixed with the dilution water, without being limited thereto.

### <Step C>

In the step C, the acid needs to be added at least before the end of the step A. In other words, in the step C, the acid needs to be added at least at any stage before the activated carbon slurry is obtained in the step A, in order to supply the activated carbon slurry while suppressing scale precipitation from the activated carbon slurry. For example, in the case of obtaining the activated carbon slurry using the dry grinding method as illustrated in FIG. 1A, the acid can be added at any stage of the preparation of the activated carbon slurry before the end of the step A2, i.e. before the mixing of the ground activated carbon water containing the ground activated carbon and the raw material water ends and the activated carbon slurry is obtained. In the case of obtaining the activated carbon slurry using the wet grinding method as illustrated in FIG. 1B, the acid can be added at any stage of the preparation of the activated carbon slurry before the end of the step A1, i.e. before the grinding of the raw material activated carbon in the activated carbon suspension water into the ground activated carbon ends and the activated carbon slurry is obtained.

As specific timing before the end of the step A (any stage before the activated carbon slurry is obtained) in the case of using the dry grinding method in which the step A1 is followed by the step A2 as illustrated in FIG. 1A, the acid is preferably added to at least one of the raw material water before flowing into the mixer 2 and the raw material water in the mixer 2 (e.g. the raw material water contained in the ground activated carbon water), and more preferably added to at least the raw material water before flowing into the mixer 2. The acid may be continuously added to the raw material water before and after flowing into the mixer 2. By adding the acid at the foregoing timing, the acid addition can be reliably performed before the contact between the ground activated carbon and the raw material water causes the calcium compound to dissolve in the water in a large amount.

As specific timing before the end of the step A (any stage before the activated carbon slurry is obtained) in the case of using the wet grinding method in which the step A2 is followed by the step A1 as illustrated in FIG. 1B, the acid is preferably added to at least one of the raw material water, the activated carbon suspension water before flowing into the grinder 3, and the activated carbon suspension water in the grinder 3, and more preferably added to at least one of the raw material water and the activated carbon suspension water before flowing into the grinder 3. The acid may be continuously added to at least one of the raw material water and the activated carbon suspension water before flowing into the grinder 3 through to the activated carbon suspension water in the grinder 3. By adding the acid at the foregoing timing, the acid addition can be reliably performed before the grinding of the raw material activated carbon in the activated carbon suspension water into the ground activated carbon causes the calcium compound to dissolve in the water in a large amount, and also scale precipitation from the activated carbon suspension water before being supplied to the grinder 3 can be suppressed.

### <<Timing of adding acid to raw material water>>

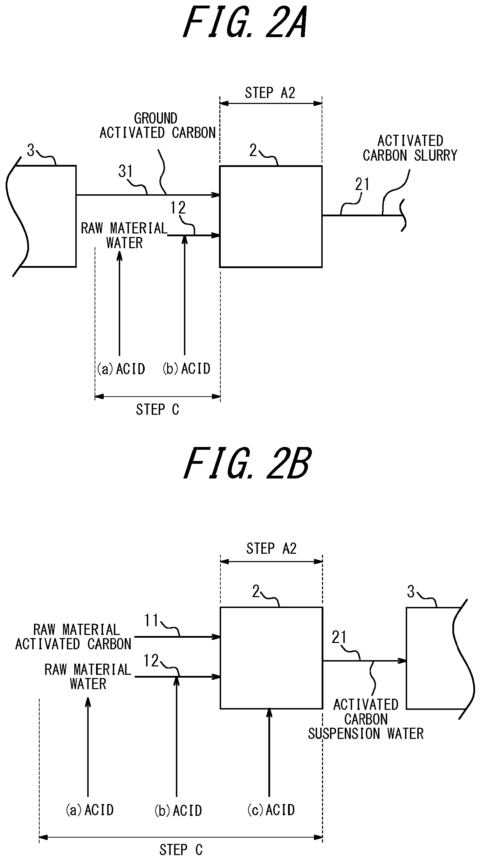

As specific timing of adding the acid to the raw material water before flowing into the mixer 2 in the case of using the dry grinding method, (a) the acid may be added to the raw material water beforehand, and (b) the acid may be added to the raw material water being conveyed to the mixer 2 through the pipe 12, as illustrated in FIG. 2A.

### <<Timing of adding acid to ground activated carbon water>>

As specific timing of adding the acid to the ground activated carbon water containing the ground activated carbon and the raw material water in the case of using the dry grinding method, the acid may be added to the ground activated carbon water before the ground activated carbon and the raw material water are stirred and mixed in the mixer 2 and/or the ground activated carbon water being stirred and mixed, as illustrated in FIG. 3A.

The acid may be added to any of these timings, and may be added (continuously) at a combination of two or more of these timings.

In particular, in the case of using the dry grinding method, it is preferable that at least (a) the acid is added to the raw material water beforehand or (b) the acid is added to the raw material water being conveyed to the mixer 2 through the pipe 12 in FIG. 2A, for the reason stated above.

As specific timing of adding the acid to the raw material water in the case of using the wet grinding method, (a) the acid may be added to the raw material water beforehand, (b) the acid may be added to the raw material water being conveyed to the mixer 2 through the pipe 12, and (c) the acid may be added to the raw material water being mixed with the raw material activated carbon in the mixer 2, as illustrated in FIG. 2B. The acid may be added to any of these timings, and may be added (continuously) at a combination of two or more of these timings.

### <<Timing of adding acid to activated carbon suspension water before flowing into grinder>>

As specific timing of adding the acid to the activated carbon suspension water before flowing into the grinder 3 in the case of using the wet grinding method, (a) and (c) the acid may be added to the activated carbon suspension water being conveyed to the grinder 3 through the pipe 21, and (b) the acid may be added to the activated carbon suspension water temporarily stored in the storage tank 20 provided at any location between the mixer 2 and the grinder 3, as illustrated in FIG. 3B. The acid may be added to any of these timings, and may be added (continuously) at a combination of two or more of these timings.

### <<Timing of adding acid to activated carbon suspension water in grinder>>

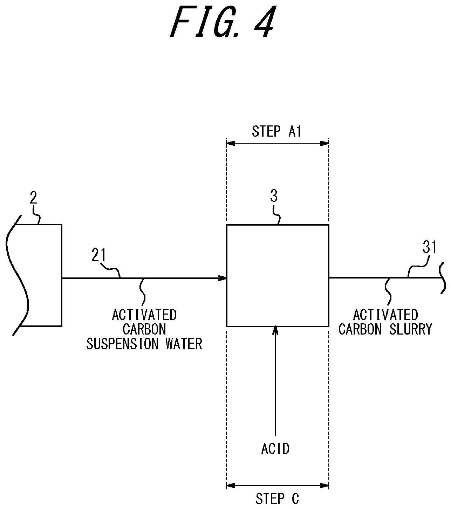

As specific timing of adding the acid to the activated carbon suspension water in the grinder 3 in the case of using the wet grinding method, the acid may be added while the raw material activated carbon in the activated carbon suspension water is being ground into the ground activated carbon in the grinder 3, as illustrated in FIG. 4.

In particular, in the case of using the wet grinding method, it is preferable to add the acid at least to the raw material water in any of (a) to (c) in FIG. 2B or to the activated carbon suspension water before flowing into the grinder 3 in any of (a) to (c) in FIG. 3B, for the reason stated above.

### <<Acid>>

The acid is not limited as long as the pH of the raw material water, the ground activated carbon water, and/or the activated carbon suspension water to which the acid is added can be adjusted to acidity as compared with the pH before the addition. In terms of handleability when added to the raw material water, the ground activated carbon water, and/or the activated carbon suspension water, the acid is preferably a gas or a liquid. Examples include carbon dioxide, sulfuric acid, nitric acid, and hydrochloric acid. In particular, for example, in terms of suppressing corrosion of metallic pipes and the like used to supply the activated carbon slurry, the acid is more preferably carbon dioxide or sulfuric acid. For example, in terms of suitably using the activated carbon slurry for water purification treatment of drinking water and the like, the acid is further preferably carbon dioxide.

In general, calcium carbonate (CaCO₃) which is a main component of scale dissolves in water in the presence of an acid and water, according to the following reaction formula (1):

CaCO₃ + H⁺ + H₂O → Ca²⁺ + HCO₃⁻ + H₂O ... (1).

Accordingly, when the acid is contained more in the activated carbon slurry, the solubility of calcium carbonate in the activated carbon slurry is higher, and scale precipitation is suppressed more easily.

Therefore, even in the case where a large amount of the calcium compound from the ground activated carbon dissolves in the water, scale precipitation from the activated carbon slurry can be suppressed easily by adding the acid at the foregoing predetermined timing in the step C. That is, even in the case where a large amount of the calcium compound from the ground activated carbon dissolves in the raw material water, the ground activated carbon water, and/or the activated carbon suspension water and the calcium compound such as calcium carbonate in the activated carbon slurry is in a supersaturated state, scale precipitation from the activated carbon slurry can be suppressed.

In the case of using carbon dioxide as the acid, in general, calcium carbonate (CaCO₃) which is a main component of scale dissolves in water as calcium hydrogen carbonate (Ca(HCO₃)₂), according to the following reaction formula (2):

CaCO₃ + CO₂ + H₂O → Ca(HCO₃)₂ ... (2).

Accordingly, when carbon dioxide is contained more in the activated carbon slurry, scale precipitation from the activated carbon slurry is suppressed more easily.

Hence, even in the case where a large amount of the calcium compound from the ground activated carbon dissolves in the raw material water, the ground activated carbon water, and/or the activated carbon suspension water, scale precipitation from the activated carbon slurry can be suppressed easily by adding carbon dioxide at the foregoing predetermined timing in the step C. Thus, by adding carbon dioxide at the foregoing predetermined timing in the step C, the, activated carbon slurry can be supplied favorably for a water purification process or the like while favorably suppressing scale precipitation.

The acid addition method is not limited. For example, an acid introduction port may be provided at a mixer, a storage, a grinder, and/or a pipe that comes into contact with the raw material water, the ground activated carbon water, and/or the activated carbon suspension water, and the acid may be added while automatically controlling the additive amount or manually controlling the additive amount using a flowmeter, a valve, and the like.

In the present disclosure, for example in the case where the additive amount of the acid is set beforehand by the below-described method, typically continuous operation is possible with the fixed set value without adjusting or changing the additive amount of the acid during the activated carbon slurry supply process. Excellent workability can thus be achieved.

### <Step D>

The activated carbon slurry supply method according to the present invention further includes the step D of determining the additive amount of the acid in the step C by a predetermined method. Specifically, the activated carbon slurry supply method according to the present invention determines the additive amount of the acid in the step C based on a time required for a predetermined step and a predetermined latency time, through the below-described steps D1 and D2. In particular, while the calcium concentration in the activated carbon slurry tends to increase considerably due to the contact between the ground activated carbon obtained by grinding the raw material activated carbon into a smaller particle size and the raw material water, by adding the amount of the acid in a range determined according to a predetermined method in the activated carbon slurry supply method according to the present disclosure, scale precipitation from the activated carbon slurry can be suppressed more favorably through the use of the latency time until the precipitation of the calcium compound from the activated carbon slurry starts.

### <<Step D1>>

First, in the step D1, the time required from the start of the later step out of the steps A1 and A2 to the end of the step B (hereafter also referred to as "time T_{R}" or "T_{R}") is determined. In the case of using the dry grinding method illustrated in FIG. 1A, the time T_{R} is the time required from the start of the step A2 (the mixing of the ground activated carbon and the raw material water such as the mixing of the ground activated carbon water) to the end of the step B. In the case of using the wet grinding method illustrated in FIG. 1B, the time T_{R} is the time required from the start of the step A1 (the grinding of the raw material activated carbon in the activated carbon suspension water) to the end of the step B. For example, the time T_{R} is the time required for a section in which the calcium compound is most likely to precipitate in the activated carbon slurry supply flow 1 illustrated in FIG. 1A or 1B.

The time T_{R} can be typically set before performing the activated carbon slurry supply process. Specifically, for example, the time T_{R} can be set by determining the grinding time and the conveyance time to the point of mixing with the dilution water or the point of mixing with the water to be treated, based on the particle size of the raw material activated carbon, the desired grinding state of the ground activated carbon in the activated carbon slurry, the desired concentration of the ground activated carbon in the activated carbon slurry, and the like. Typically, without adjusting or changing the preset time T_{R} during the activated carbon slurry supply process, continuous operation is possible with the fixed set value.

### «Step D2»

In the step D2 which follows, based on the relationship between the amount of the acid contained in the activated carbon slurry (i.e. the amount of the acid added in the step C) and the latency time until the precipitation of the calcium compound from the activated carbon slurry starts (hereafter also referred to as "latency time T_{S}" or "T_{S}"), the amount of the acid necessary for the latency time T_{S} to exceed the time T_{R} determined in the step D1 (T_{S} > T_{R}) is determined as the additive amount of the acid in the step C. By setting T_{S} > T_{R}, the formation of scale up to the point of mixing with the water to be treated or the dilution water when supplying the activated carbon slurry can be suppressed reliably.

Typically, the concentration of calcium that can dissolve in the activated carbon slurry increases as the additive amount of the acid increases, as mentioned above. That is, the latency time Ts tends to be longer when the additive amount of the acid is greater. Hence, the suitable minimum amount of the acid to be added in the step C can be determined in the step D.

### [Relationship between amount of acid and Ts]

The relationship between the amount of the acid contained in the activated carbon slurry and the latency time T_{S} until the precipitation of the calcium compound from the activated carbon slurry starts is determined in a laboratory scale using the following method before the activated carbon slurry supply process, in terms of work cost and work convenience.

First, the calcium concentration in the raw material activated carbon is measured. The calcium concentration in the raw material activated carbon is measured by analyzing, with an induction coupled plasma mass spectrometer (ICP-MS), a sample obtained by dissolving ash of the raw material activated carbon ignited at a temperature of 600 °C with an acid such as hydrochloric acid or nitric acid, and calculating the content of the calcium compound in the raw material activated carbon. Following this, based on the measured content of the calcium compound in the raw material activated carbon and the blending proportion of the raw material activated carbon and the raw material water used in an actual activated carbon slurry supply process, the calcium concentration in the activated carbon slurry on an assumption that the calcium compound contained in the charged raw material activated carbon is all dissolved in the raw material water. Calcium salt such as calcium chloride is then dissolved in the raw material water used in the actual supply method so as to be at the calculated calcium concentration. When dissolving calcium chloride, sodium hydrogen carbonate may be further dissolved to adjust the resultant calcium aqueous solution to have alkalinity equal to the alkalinity of the activated carbon slurry used in the actual supply method.

Herein, "alkalinity" is a value (mg/L) calculated by converting the total amount of carbonic acid (H₂CO₃), carbonate ion (CO₃²⁻), hydrogen carbonate ion (HCO₃⁻), and hydroxide ion (OH⁻) that can be contained in the activated carbon slurry to the amount of calcium carbonate (CaCOs), and can be determined by titration. The pH of the resultant calcium aqueous solution can be adjusted by adding sodium hydroxide and/or sulfuric acid according to the desired pH. The temperature when preparing the calcium aqueous solution may be the same as the temperature of the actual activated carbon slurry supply process.

Next, the relationship between the additive amount of the acid to the resultant calcium aqueous solution and the time T_{S}' from when the preparation of the calcium aqueous solution ends to when the calcium compound starts to precipitate in the calcium aqueous solution is determined. The additive amount of the acid associated with the time T_{S}' may be, for example, a parameter directly indicating the additive amount of the acid such as the mass or volume of the acid added, or a parameter indirectly indicating the additive amount of the acid such as the pH of the calcium aqueous solution. For example, the time T_{S}' may be measured as the time until the calcium concentration in the calcium aqueous solution starts to decrease, or the time until a white precipitate in the calcium aqueous solution becomes visually recognizable.

The time T_{S}' until the calcium compound starts to precipitate in the calcium aqueous solution, which is calculated in a laboratory scale as described above, is used as the latency time T_{S} until the precipitation of the calcium compound from the activated carbon slurry starts in the actual supply process.

By performing the same process a plurality of times while changing the additive amount of the acid, relationship data (table or graph) between the additive amount of the acid (the foregoing direct parameter or indirect parameter) and the time T_{S}' is obtained. More specifically, for example, a graph representing the acid addition mass on the horizontal axis and Ts' on the vertical axis, a graph representing the acid addition volume on the horizontal axis and T_{S}' on the vertical axis, or a graph representing pH on the horizontal axis and T_{S}' on the vertical axis can be obtained.

The calculation of the calcium concentration in the activated carbon slurry is preferably performed in consideration of the calcium concentration in the raw material water. Water mainly intended for use as the raw material water, such as tap water, purification treated water purified by the purification method including the supply method according to the present disclosure, and treated water during the process of purification by the purification method including the supply method according to the present disclosure, has a calcium concentration approximately in a range of 10 mg/L to 100 mg/L (water quality standard for drinking water).

### [Determination of additive amount of acid]

Next, based on the relationship between the amount of the acid contained in the activated carbon slurry and the latency time T_{S} until the precipitation of the calcium compound from the activated carbon slurry starts, the amount of the acid that causes the latency time T_{S} to exceed the time T_{R} calculated in the step D1 (T_{S} > T_{R}) is determined as the additive amount of the acid in the step C. As a specific example, the amount of the acid contained in the activated carbon slurry when T_{S} = T_{R} (acid amount_{MIN}) is calculated from the relationship between the amount of the acid and Ts obtained as described above. The acid amount_{MIN} may be calculated as the pH of the activated carbon slurry when Ts = T_{R} (pH_{MAX}). Any acid amount exceeding the acid amount_{MIN} or necessary for the pH to be less than pH_{MAX} can then be determined as the additive amount of the acid in the step C. By setting Ts > T_{R} in this way, the formation of scale up to the point of mixing with the water to be treated or the dilution water when supplying the activated carbon slurry can be suppressed reliably.

The additive amount of the acid determined in the step D2 is preferably not more than the amount of the acid necessary for causing the Langelier's index of the activated carbon slurry to be 0 (acid amount_{MAX}). When suppressing scale precipitation, the amount of the acid that causes the Langelier's index to be minus (i.e. a larger amount of the acid than the acid amount_{MAX} is added and the calcium compound is in an unsaturated state) is typically added. In the activated carbon slurry containing the ground activated carbon obtained by grinding the raw material activated carbon and the raw material water, however, there is a possibility that a large amount of the calcium compound from the activated carbon dissolves in the water and the dissolution of the calcium compound is accelerated by the acid addition. Hence, a large amount of the acid is needed in order to add such an amount of the acid that causes the Langelier's index to be minus in scale suppression of the activated carbon slurry containing the ground activated carbon. Meanwhile, there is the latency time T_{S} before the precipitation of the calcium compound from the activated carbon slurry starts, as mentioned above. Accordingly, by setting the additive amount of the acid to not more than the foregoing upper limit in the step D2, the activated carbon slurry can be supplied to a predetermined point without scale precipitation even when the calcium compound in the activated carbon slurry is in a supersaturated state. A smaller amount of the acid can thus be used to suppress scale precipitation from the activated carbon slurry more efficiently and further reduce the activated carbon slurry supply cost.

With this feature, scale precipitation can be suppressed with a smaller amount of the acid and thus remarkable effects can be achieved in terms of work cost and safety, as compared with the conventional techniques that address the problem of scale precipitation by adding a relatively large amount of acid to cause an unsaturated state of calcium compound. Moreover, suppressing scale precipitation even when the calcium compound is in a supersaturated state is based on specific problems encountered by the techniques using ground activated carbon and water, such as a large amount of calcium compound dissolving as a result of the ground activated carbon reduced in particle size by grinding and the raw material water being in contact with each other, and the dissolution of the calcium compound being facilitated in an unsaturated state of the calcium compound.

Typically, the acid amount_{MAX} necessary for causing the Langelier's index of the activated carbon slurry showing alkalinity to be 0 is the suitable maximum amount of the acid that can be added in the step C, as described above.

The Langelier's index is an index indicating the degree of saturation of calcium carbonate. Since a main component of a calcium compound causing scale precipitation is normally calcium carbonate, scale precipitation can be suppressed more efficiently by using the Langelier's index in the present disclosure.

In the foregoing example, the latency time is from the addition of the acid to the start of the precipitation. In the present disclosure, for example, when the amount of the acid determined in the step D is added to the raw material water before flowing into the mixer 2 in the step C in the case of using the dry grinding method or to the raw material water and/or the activated carbon suspension water before flowing into the grinder 3 in the step C in the case of using the wet grinding method, the time from the addition of the acid to the end of the step B (the end of T_{R}) may be longer than the calculated latency time T_{S} until the precipitation of the calcium compound starts. However, there is hardly any dissolution of the calcium compound from the activated carbon in the section before the step A2 in the case of using the dry grinding method and in the section before the step A1 in the case of using the wet grinding method (i.e. the section before the ground activated carbon and the raw material water come into contact with each other). Thus, in the foregoing section, the concentration calcium which can cause calcium compound precipitation is several orders of magnitude lower than in the section from the start of the step A2 to the end of the step B in the case of using the dry grinding method and in the section from the start of the step A1 to the end of the step B in the case of using the wet grinding method (i.e. the section in which the ground activated carbon and the raw material water are in contact with each other), and therefore scale precipitation is relatively not problematic. Therefore, even in the foregoing case, scale precipitation can be suppressed favorably in the activated carbon slurry supply process as long as the amount of the acid determined in the step D is added at predetermined timing.

The pH in the raw material water and/or the activated carbon suspension water may tend to increase with the passage of time from the addition of the acid. Hence, particularly when adding the acid at early timing in the step C (e.g. to the raw material water before flowing into the mixer 2 in the case of using the dry grinding method, and to the raw material water and/or the activated carbon suspension water before flowing into the grinder 3 in the case of using the wet grinding method), the amount of the acid determined in the step D may be added little by little in order to maintain the pH adjusted to the desired value during the process. Specifically, the acid may be continuously added little by little up to the start of the step A2 in the case of using the dry grinding method and up to the start of the step A1 in the case of using the wet grinding method. In addition to the amount of the acid determined in the step D, such an amount of the acid that can suppress an increase of pH may be further added. Particularly when adding the acid to the raw material water before flowing into the mixer in the case of using the dry grinding method and to the activated carbon suspension water before flowing into the grinder in the case of using the wet grinding method in the step C, the acid may be added immediately before the start of the step A2 or the start of the step A1 in the corresponding case in order to maintain the pH adjusted to the desired value during the process.

### EXAMPLES

More detailed description will be given below based on examples, yet the present disclosure is not limited to these examples. In the following, "%" used in expressing quantities are by mass, unless otherwise specified.

### (Example 1)

In an activated carbon slurry continuous supply system for conveying activated carbon slurry obtained by grinding, by a grinder (wet bead mill), raw material activated carbon in activated carbon suspension water generated by mixing the raw material activated carbon and raw material water to a point of mixing with water to be treated flowing in a potable water treatment system, carbon dioxide was blown into the activated carbon suspension water in the grinder. Specifically, carbon dioxide was continuously blown at a speed of 2.0 normal L/min up to when the pH of the activated carbon slurry stopped decreasing (the amount of carbon dioxide per 1 kg of the ground activated carbon contained in the activated carbon slurry reached 15 normal L). Following this, sulfuric acid was added to the activated carbon suspension water in the grinder, to adjust the pH to a pH (6.3) at which the Langelier's index of the activated carbon slurry was 0.

When visually checking whether scale precipitated in the pipes one month after the operation in the continuous supply system, no scale was observed.

As the raw material activated carbon, commercially available powdered activated carbon for potable water treatment (average particle size: 15 µm) was used. As the raw material water, tap water was used.

### (Example 2)

By adding nitric acid to raw material activated carbon ignited at a temperature of 600 °C for 2 hr, a sample solution in which the components of the raw material activated carbon had been dissolved was prepared. For the resultant sample solution, the calcium concentration in the raw material activated carbon was measured using an ICP-MS. The measured calcium concentration in the raw material activated carbon was 2.9 g/kg. From the measured calcium concentration and the blending proportion of the raw material activated carbon and the raw material water used in an actual continuous supply system, the maximum concentration of a calcium compound that can be present in the activated carbon slurry was theoretically calculated. A calcium aqueous solution was then prepared using calcium chloride as a solute and tap water (raw material water) as a solvent so that the calcium concentration was the foregoing maximum concentration.

After this, sodium hydrogen carbonate was added to the resultant calcium aqueous solution so as to have alkalinity equal to the alkalinity of the activated carbon slurry. Further, a sodium hydroxide aqueous solution or sulfuric acid was added according to the pH to be adjusted, thus adjusting the pH of the calcium aqueous solution in a range of 6.0 to 9.0 by 0.1. Subsequently, the latency time T_{S}' from the adjustment of the pH to the start of the precipitation of the calcium compound was measured for each calcium aqueous solution. The point of the start of the precipitation of the calcium compound was determined as follows: The calcium aqueous solution was filtered with filter paper (grade: GF/B), and the point at which the calcium concentration of the filtrate measured by titration decreased by more than 1 % was taken to be the point of the start of the precipitation of the calcium compound.

A graph indicating the relationship between the pH and the latency time T_{S}' of the calcium aqueous solution was then obtained by plotting the adjusted pH on the x axis and the latency time T_{S}' corresponding to the pH on the y axis. In the obtained graph, the latency time T_{S}' increases exponentially as the pH decreases.

From the obtained graph, pH' = 7.3 when the time T_{R} = 5 hr on the y axis was recognized, where the time T_{R} is the time from when the grinding of the raw material activated carbon starts (the point at which the activated carbon suspension water flows into the grinder) to when the activated carbon slurry is conveyed to the point of mixing with the water to be treated in the foregoing continuous supply system. Moreover, pH" = 6.3 necessary for causing the Langelier's index of the activated carbon slurry to be 0 was calculated according to the foregoing method notified by Ministry of Health, Labour and Welfare.

The activated carbon slurry was then continuously supplied in the same way as Example 1, except that carbon dioxide in an amount of 6 normal L per 1 kg of ground activated carbon contained in the activated carbon slurry was blown at a speed of 0.5 normal L/min so that the pH of the activated carbon slurry was pH = 7.0 which is pH" or more and less than pH', i.e. in a range of 6.3 or more and less than 7.3. Calcium carbonate in the activated carbon slurry at this time was in a supersaturated state.

When visually checking whether scale precipitated in the pipes in the same way as Example 1, no scale was observed. Thus, in Example 2, scale precipitation was prevented more efficiently by adding a smaller amount of acid than in Example 1.

### (Comparative Example 1)

In the foregoing continuous supply system, activated carbon slurry was continuously supplied in the same way as Example 1, except that carbon dioxide was not blown.

When visually checking whether scale precipitated in the pipes in the same way as Example 1, scale precipitation was observed.

### (Comparative Example 2)

In the foregoing continuous supply system, activated carbon slurry was continuously supplied in the same way as Example 1, except that carbon dioxide was not blown into any of the raw material water, the activated carbon suspension water before flowing into the grinder, and the activated carbon suspension water in the grinder but blown into only the obtained activated carbon slurry.

When visually checking whether scale precipitated in the pipes in the same way as Example 1, scale precipitation was observed.

### (Reference Example)

In the foregoing continuous supply system, activated carbon suspension water containing raw material activated carbon and water was directly supplied, without grinding the raw material activated carbon in the activated carbon suspension water (i.e. without obtaining activated carbon slurry) and without blowing carbon dioxide.

When visually checking whether scale precipitated in the pipes in the same way as Example 1, no scale was observed.

### INDUSTRIAL APPLICABILITY

It is thus possible to provide an activated carbon slurry supply method that can favorably suppress scale precipitation from activated carbon slurry even when the activated carbon slurry contains ground activated carbon and water.

### REFERENCE SIGNS LIST

- 1: typical activated carbon slurry supply flow
- 2: mixer
- 3: grinder
- 4: mixer for mixing with dilution water
- 5: mixer for mixing with water to be treated
- 11, 12, 21, 31, 41: pipe
- 20: storage tank

## Claims

1. An activated carbon slurry supply method comprising:
a step A of obtaining activated carbon slurry containing ground activated carbon and raw material water, the step A including, in any order, a step A1 of grinding raw material activated carbon in a grinder to prepare the ground activated carbon having a smaller particle size than a particle size of the raw material activated carbon, and a step A2 of mixing either the raw material water and the raw material activated carbon or the raw material water and the ground activated carbon in a mixer;
a step B of conveying the activated carbon slurry to a point of mixing with dilution water or a point of mixing with water to be treated; and
a step C of adding an acid in an amount to thereby suppress scale precipitation, step C being performed before end of the step A and the obtainment of the activated carbon slurry,
wherein the step B includes mixing the activated carbon slurry with the dilution water, or mixing the activated carbon slurry with the water to be treated without mixing it with the dilution water,
wherein the particle size of the ground activated carbon contained in the activated carbon slurry is 0.1 µm or more and 10 µm or less in volume average particle size (D50) at which, in a volume based particle size distribution measured by laser diffraction scattering, the cumulative volume calculated from a small diameter to end of the distribution reaches 50%, wherein the activated carbon concentration of the activated carbon slurry obtained in the step A is 0.1 mass% or more and 10 mass% or less and
wherein the activated carbon slurry supply method further comprising a step D of determining the additive amount of the acid in the step C,
wherein the step D includes a step D1 of determining a time T_{R} required from start of the later step out of the step A1 and the step A2 to end of the step B, and a step D2 of determining, based on a relationship between an amount of the acid contained in the activated carbon (i.e. the amount of acid added in step C) and a latency time Ts until precipitation of a calcium compound from the activated carbon slurry starts, an amount of the acid that causes the latency time Ts to be more than the time T_{R} determined in the step D1, as the additive amount of the acid in the step C,
wherein the relationship between the amount of the acid contained in the activated carbon slurry and latency time Ts until the precipitation of the calcium compound from the activated carbon slurry starts is determined in a laboratory scale using the first following method before the activated carbon slurry supply method is performed:
(i) first, a calcium concentration in the raw material activated carbon is measured, wherein the calcium concentration in the raw material activated carbon is measured by analyzing, with an induction coupled plasma mass spectrometer (ICP-MS), a sample obtained by dissolving ash of the raw material activated carbon ignited at a temperature of 600°C with an acid, and calculating the content of the calcium compound in the raw material activated carbon;
(ii) following this, based on the measured content of the calcium compound in the raw material activated carbon, the blending proportion of the raw material activated carbon and the raw material water used in an actual activated carbon slurry supply process and the calcium concentration in the raw material water, the calcium concentration in the activated carbon slurry is determined on an assumption that the calcium compound contained in the charged raw material activated carbon is all dissolved in the raw material water;
(iii) calcium salt is then dissolved in the raw material water used in the actual supply method so as to be at the calcium concentration determined in step (ii);
(iv) next, the relationship between the additive amount of the acid to a resultant calcium aqueous solution obtained by dissolving the calcium salt in the raw material water in step (iii) and the time Ts' from when the preparation of the calcium aqueous solution ends to when the calcium compound starts to precipitate in the calcium aqueous solution is determined by changing the additive amount of the acid to obtain relationship data between the additive amount of the acid and the time Ts'; and;
(v) the time Ts' is used as the latency time Ts.

2. The activated carbon slurry supply method according to claim 1, wherein the additive amount of the acid determined in the step D2 is not more than an amount of the acid necessary for causing a Langelier's index of the activated carbon slurry to be 0.

3. The activated carbon slurry supply method according to claim 1 or claim 2, wherein in the step A, the step A1 is followed by the step A2,
in the step A2, ground activated carbon water containing the ground activated carbon prepared in the step A1 and the raw material water is mixed in the mixer to obtain the activated carbon slurry, and
in the step C, the acid is added to at least one of the raw material water before flowing into the mixer and the ground activated carbon water in the mixer.

4. The activated carbon slurry supply method according to claim 3, wherein in the step C, the acid is added to at least the raw material water before flowing into the mixer.

5. The activated carbon slurry supply method according to claim 1 or claim 2, wherein in the step A, the step A2 is followed by the step A1,
in the step A1, the raw material activated carbon in activated carbon suspension water obtained by mixing the raw material activated carbon and the raw material water is ground in the grinder to obtain the activated carbon slurry, and
in the step C, the acid is added to at least one of the raw material water, the activated carbon suspension water before flowing into the grinder, and the activated carbon suspension water in the grinder.

6. The activated carbon slurry supply method according to claim 5, wherein in the step C, the acid is added to at least one of the raw material water and the activated carbon suspension water before flowing into the grinder.

7. The activated carbon slurry supply method according to claims 1 to 6, wherein the acid is carbon dioxide or sulfuric acid.

## Patentansprüche

1. Aktivkohleaufschlämmungszuführverfahren, das Folgendes umfasst:
einen Schritt A des Erhaltens einer Aktivkohleaufschlämmung, die gemahlene Aktivkohle und Rohmaterial-Wasser umfasst, wobei Schritt A in beliebiger Reihenfolge einen Schritt A1 des Mahlens von Rohmaterial-Aktivkohle in einer Mühle zur Herstellung der gemahlenen Aktivkohle mit einer kleineren Partikelgröße als die Partikelgröße der Rohmaterial-Aktivkohle und einen Schritt A2 des Vermischens entweder des Rohmaterial-Wassers und der Rohmaterial-Aktivkohle oder des Rohmaterial-Wassers und der gemahlenen Aktivkohle in einem Mischer umfasst;
einen Schritt B des Beförderns der Aktivkohleaufschlämmung zu einem Mischpunkt mit Verdünnungswasser oder einem Mischpunkt mit zu behandelndem Wasser; und
einen Schritt C des Zugebens einer Säure in einer Menge, um so Kesselsteinbildung zu unterdrücken, wobei Schritt C vor dem Ende von Schritt A und dem Erhalt der Aktivkohleaufschlämmung durchgeführt wird,
wobei Schritt B das Vermischen der Aktivkohleaufschlämmung mit dem Verdünnungswasser oder das Vermischen der Aktivkohleaufschlämmung mit dem zu behandelnden Wasser ohne Vermischen mit dem Verdünnungswasser umfasst,
wobei die Partikelgröße der gemahlenen Aktivkohle, die in der Aktivkohleaufschlämmung enthalten ist, von 0,1 µm oder mehr und 10 µm oder weniger der volumenmittleren Partikelgröße (D50) beträgt, wobei in einer durch Laserbeugungsstreuung gemessenen volumenbasierten Partikelgrößenverteilung das von einem kleinen Durchmesser bis zum Ende der Verteilung berechnete kumulative Volumen 50 % erreicht,
wobei die Aktivkohlekonzentration der Aktivkohleaufschlämmung, die in Schritt A erhalten wird, 0,1 Masse-% oder mehr und 10 Masse-% oder weniger beträgt und
wobei das Aktivkohleaufschlämmungszuführverfahren weiters einen Schritt D des Bestimmens der Zugabemenge der Säure in Schritt C umfasst,
wobei Schritt D einen Schritt D1 des Bestimmens einer Zeit T_{R}, die vom Beginn des späteren Schritts aus Schritt A1 und Schritt A2 bis zum Ende von Schritt B erforderlich ist, und einen Schritt D2 des Bestimmens, basierend auf einer Beziehung zwischen der in der Aktivkohle enthaltenen Säuremenge (d. h. der in Schritt C zugegebenen Säuremenge) und einer Latenzzeit Ts bis zum Beginn des Ausfallens einer Calciumverbindung aus der Aktivkohleaufschlämmung, einer Säuremenge, die bewirkt, dass die Latenzzeit Ts mehr als die in Schritt D1 bestimmte Zeit T_{R} ist, als zugesetzte Menge der Säure in Schritt C,
wobei die Beziehung zwischen der in der Aktivkohleaufschlämmung enthaltenen Säure und der Latenzzeit Ts, bis das Ausfallen der Calciumverbindung aus der Aktivkohleaufschlämmung beginnt, in einem Labormaßstab unter Verwendung des ersten folgenden Verfahrens bestimmt wird, bevor das Aktivkohleaufschlämmungszuführverfahren ausgeführt wird:
(i) zuerst wird die Calciumkonzentration in der Rohmaterial-Aktivkohle gemessen, wobei die Calciumkonzentration in der Rohmaterial-Aktivkohle durch Analysieren, mittels eines Massenspektrometers mit induktiv gekoppeltem Plasma (ICP-MS), einer Probe, die durch Auflösen von Asche der bei einer Temperatur von 600 °C entzündeten Rohmaterial-Aktivkohle mit einer Säure erhalten wurde, und Berechnen des Calciumverbindungsgehalts in der Rohmaterial-Aktivkohle gemessen wird;
(ii) anschließend wird, basierend auf dem gemessenen Calciumverbindungsgehalt in der Rohmaterial-Aktivkohle, dem eingemischten Anteil der Rohmaterial-Aktivkohle und des Rohmaterial-Wassers, die in einem tatsächlichen Aktivkohleaufschlämmungszuführverfahren verwendet werden, und der Calciumkonzentration im Rohmaterial-Wasser, die Calciumkonzentration in der Aktivkohleaufschlämmung anhand der Annahme bestimmt, dass die in der geladenen Rohmaterial-Aktivkohle enthaltene Calciumverbindung vollständig im Rohmaterial-Wasser gelöst wird;
(iii) dann wird Calciumsalz im Rohmaterial-Wasser gelöst, das im tatsächlichen Zuführverfahren verwendet wird, um die in Schritt (ii) bestimmte Calciumkonzentration aufzuweisen;
(iv) als Nächstes wird die Beziehung zwischen der zugesetzten Menge der Säure und einer resultierenden wässrigen Calciumlösung, die durch Auflösen des Calciumsalzes im Rohmaterial-Wasser in Schritt (iii) erhalten wird, und der Zeit Ts' vom Ende des Ausfallens der wässrigen Calciumlösung bis zum Beginn der Ausfallens der Calciumverbindung in der wässrigen Calciumlösung bestimmt, indem die zugesetzte Menge der Säure geändert wird, um Beziehungsdaten zwischen der zugesetzten Menge der Säure und der Zeit Ts' zu erhalten; und
(v) die Zeit Ts' wird als Latenzzeit Ts verwendet.

2. Aktivkohleaufschlämmungszuführverfahren nach Anspruch 1, wobei die zugesetzte Menge der Säure, die in Schritt D2 bestimmt wird, nicht mehr als die Säuremenge ist, die notwendig ist, um zu bewirken, dass der Langelier-Index der Aktivkohleaufschlämmung 0 beträgt.

3. Aktivkohleaufschlämmungszuführverfahren nach Anspruch 1 oder Anspruch 2, wobei in Schritt A nach dem Schritt A1 der Schritt A2 folgt,
wobei in Schritt A2 Wasser mit gemahlener Aktivkohle, das die in Schritt A1 hergestellte gemahlene Aktivkohle enthält, und das Rohmaterial-Wasser im Mischer vermischt werden, um die Aktivkohleaufschlämmung zu erhalten, und
in Schritt C die Säure zu zumindest einem aus dem Rohmaterial-Wasser vor dem Einfließen in den Mischer und dem Wasser mit gemahlener Aktivkohle im Mischer zugegeben wird.

4. Aktivkohleaufschlämmungszuführverfahren nach Anspruch 3, wobei in Schritt C die Säure zu zumindest dem Rohmaterial-Wasser vor dem Einfließen in den Mischer zugegeben wird.

5. Aktivkohleaufschlämmungszuführverfahren nach Anspruch 1 oder Anspruch 2, wobei in Schritt A nach dem Schritt A2 der Schritt A1 folgt,
wobei in Schritt A1 die Rohmaterial-Aktivkohle in Aktivkohle-Suspensionswasser, erhalten durch Vermischen der Rohmaterial-Aktivkohle und des Rohmaterial-Wassers, in der Mühle gemahlen wird, um die Aktivkohleaufschlämmung zu erhalten, und
in Schritt C die Säure zu zumindest einem aus dem Rohmaterial-Wasser, dem Aktivkohle-Suspensionswasser vor dem Einfließen in die Mühle und dem Aktivkohle-Suspensionswasser in der Mühle zugegeben wird.

6. Aktivkohleaufschlämmungszuführverfahren nach Anspruch 5, wobei in Schritt C die Säure zu zumindest einem aus dem Rohmaterial-Wasser und dem Aktivkohle-Suspensionswasser vor dem Einfließen in die Mühle zugegeben wird.

7. Aktivkohleaufschlämmungszuführverfahren nach einem der Ansprüche 1 bis 6, wobei die Säure Kohlendioxid oder Schwefelsäure ist.

## Revendications

1. Procédé de fourniture de suspension de charbon actif, comprenant :
une étape A d'obtention d'une suspension de charbon actif contenant du charbon actif broyé et de l'eau de matière première, l'étape A incluant, dans un ordre quelconque, une étape A1 de broyage de charbon actif de matière première dans un broyeur pour préparer le charbon actif broyé présentant une taille de particule inférieure à une taille de particule du charbon actif de matière première, et une étape A2 de mélange de l'eau de matière première et du charbon actif de matière première ou de l'eau de matière première et du charbon actif broyé dans un mélangeur ;
une étape B d'acheminement de la suspension de charbon actif jusqu'à un point de mélange avec de l'eau de dilution ou un point de mélange avec de l'eau à traiter ; et
une étape C d'addition d'un acide en une quantité permettant de supprimer une précipitation de tartre, l'étape C étant effectuée avant la fin de l'étape A et l'obtention de la suspension de charbon actif,
dans lequel l'étape B inclut un mélange de la suspension de charbon actif avec l'eau de dilution, ou un mélange de la suspension de charbon actif avec l'eau à traiter sans la mélanger avec l'eau de dilution,
dans lequel la taille de particule du charbon actif broyé contenu dans la suspension de charbon actif est de 0,1 µm ou plus et de 10 µm ou moins en taille de particule moyenne en volume (D50) à laquelle, dans une distribution de taille de particule basée sur le volume mesurée par diffusion par diffraction laser, le volume cumulé calculé à partir d'un petit diamètre jusqu'à la fin de la distribution atteint 50 %,
dans lequel la concentration de charbon actif de la suspension de charbon actif obtenue à l'étape A est de 0,1 % en masse ou plus et de 10 % en masse ou moins, et
dans lequel le procédé de fourniture de suspension de charbon actif comprend en outre une étape D de détermination de la quantité ajoutée de l'acide dans l'étape C,
dans lequel l'étape D inclut une étape D1 de détermination d'un temps T_{R} nécessaire depuis le début de la dernière étape en dehors de l'étape A1 et de l'étape A2 jusqu'à la fin de l'étape B,
et une étape D2 de détermination, sur la base d'une relation entre une quantité de l'acide contenu dans le charbon actif (c'est-à-dire la quantité d'acide ajoutée à l'étape C) et un temps de latence Ts jusqu'à ce que la précipitation d'un composé de calcium à partir de la suspension de charbon actif commence, d'une quantité de l'acide qui fait que le temps de latence Ts est supérieur au temps T_{R} déterminé à l'étape D1, en tant que quantité ajoutée de l'acide à l'étape C,
dans lequel la relation entre la quantité de l'acide contenu dans la suspension de charbon actif et le temps de latence Ts jusqu'à ce que la précipitation du composé de calcium à partir de la suspension de charbon actif commence est déterminée à l'échelle d'un laboratoire en utilisant le premier procédé suivant avant que le procédé de fourniture de suspension de charbon actif soit effectué :
(i) tout d'abord, une concentration de calcium dans le charbon actif de matière première est mesurée, la concentration de calcium dans le charbon actif de matière première étant mesurée en analysant, avec un spectromètre de masse à plasma couplé par induction (ICP-MS), un échantillon obtenu par dissolution de cendres du charbon actif de matière première enflammé à une température de 600°C avec un acide, et en calculant la teneur en composé de calcium dans le charbon actif de matière première ;
ii) ensuite, sur la base de la teneur mesurée du composé de calcium dans le charbon actif de matière première, de la proportion de mélange du charbon actif de matière première et de l'eau de matière première utilisés dans un processus de fourniture de suspension de charbon actif actuel et de la concentration en calcium dans l'eau de matière première, la concentration en calcium dans la suspension de charbon actif est déterminée en supposant que le composé de calcium contenu dans le charbon actif de matière première chargé est entièrement dissous dans l'eau de matière première ;
(iii) le sel de calcium est ensuite dissous dans l'eau de matière première utilisée dans le procédé de fourniture actuel de manière à être à la concentration de calcium déterminée à l'étape (ii) ;
(iv) ensuite, la relation entre la quantité ajoutée de l'acide et une solution aqueuse de calcium résultante obtenue en dissolvant le sel de calcium dans l'eau de matière première dans l'étape (iii) et le temps Ts' entre le moment où la préparation de la solution aqueuse de calcium se termine et le moment où le composé de calcium commence à précipiter dans la solution aqueuse de calcium est déterminée en changeant la quantité ajoutée de l'acide pour obtenir des données de relation entre la quantité ajoutée de l'acide et le temps Ts' ; et
(v) le temps Ts' est utilisé en tant que temps de latence Ts.

2. Procédé de fourniture de suspension de charbon actif selon la revendication 1, dans lequel la quantité ajoutée de l'acide déterminée dans l'étape D2 n'est pas supérieure à une quantité de l'acide nécessaire pour amener un indice de Langelier de la suspension de charbon actif à être 0.

3. Procédé de fourniture de suspension de charbon actif selon la revendication 1 ou la revendication 2, dans lequel à l'étape A, l'étape A1 est suivie de l'étape A2,
à l'étape A2, de l'eau de charbon actif broyé contenant le charbon actif broyé préparé à l'étape A1 et l'eau de matière première sont mélangées dans le mélangeur pour obtenir la suspension de charbon actif, et
à l'étape C, l'acide est ajoutée à au moins l'une de l'eau de matière première avant écoulement dans le mélangeur et de l'eau de charbon actif broyé dans le mélangeur.

4. Procédé de fourniture de suspension de charbon actif selon la revendication 3, dans lequel, à l'étape C, l'acide est ajouté à au moins l'eau de matière première avant écoulement dans le mélangeur.

5. Procédé de fourniture de suspension de charbon actif selon la revendication 1 ou la revendication 2, dans lequel à l'étape A, l'étape A2 est suivie de l'étape A1,
à l'étape A1, le charbon actif de matière première dans l'eau de suspension de charbon actif obtenu en mélangeant le charbon actif de matière première et l'eau de matière première est broyé dans le broyeur pour obtenir la suspension de charbon actif, et
À l'étape C, l'acide est ajouté à au moins une parmi l'eau de matière première, l'eau de suspension de charbon actif avant écoulement dans le broyeur, et l'eau de suspension de charbon actif dans le broyeur.

6. Procédé de fourniture de suspension de charbon actif selon la revendication 5, dans lequel, à l'étape C, l'acide est ajouté à au moins une parmi l'eau de matière première et l'eau de suspension de charbon actif avant écoulement dans le broyeur.

7. Procédé de fourniture de suspension de charbon actif selon les revendications 1 à 6, dans lequel l'acide est du dioxyde de carbone ou de l'acide sulfurique.
